# EUROPÄISCHE PATENTANMELDUNG

(11) **EP 4 728 941 A1**
(43) Veröffentlichungstag der Anmeldung: **22.04.2026**
(21) Anmeldenummer: 25206925.7
(22) Anmeldetag: 06.10.2025
(51) Int. Cl.: A47J 36/32

(54) **KOCHGESCHIRR**

(30) Priorität: 16.10.2024 LU 103416
(71) Anmelder: Miele & Cie. KG, 33332 Gütersloh (DE)
(72) Erfinder: Hölscher, Britta, 30167 Hannover (DE); Müller, Christoph, 32289 Rödinghausen (DE)

(57) **Zusammenfassung**

Kochgeschirr (1) umfassend einen Kochgeschirrgrundkörper (2), ein Anbauteil (3) und eine Elektronikeinrichtung (4) mit einem Energiespeicher (5), wobei der Kochgeschirrgrundkörper (2) einen Boden (6) und eine Wandung (7) umfasst und, welche ein Aufnahmevolumen (8) begrenzen. Das Anbauteil (3) ist an der Außenseite (9) der Wandung (7) angeordnet und die Elektronikeinrichtung (4) ist zwischen einer Vorderseite (10) des Anbauteils (3) und der Wandung (7) angeordnet. Weiterhin ist ein Luftleitkanal (13) in Wirkverbindung zu der Elektronikeinrichtung (4) und/oder. dem Energiespeicher (5) in dem Anbauteil (3) und/oder zwischen dem Anbauteil (3) und der Außenseite (9) der Wandung (7) vorgesehen.

## Beschreibung

Die vorliegende Erfindung betrifft ein Kochgeschirr umfassend wenigstens einen Kochgeschirrgrundkörper, wenigstens ein Anbauteil und wenigstens eine Elektronikeinrichtung mit wenigstens einem Energiespeicher. Der der Kochgeschirrgrundkörper umfasst wenigstens einen Boden und wenigstens eine Wandung, welche wenigstens ein Aufnahmevolumen begrenzen. Das Anbauteil ist an der Außenseite der Wandung angeordnet, wobei die Elektronikeinrichtung wenigstens abschnittsweise zwischen einer Vorderseite des Anbauteils und der Wandung angeordnet ist.

Modernes Kochgeschirr kann je nach Ausstattung einen Benutzer bei der Zubereitung von Speisen sehr gut unterstützen oder sogar selbstständig Kochprozesse durchführen und/oder wenigstens zeitweise steuern.

Dazu ist unter anderem auch Kochgeschirr bekannt geworden, bei welchem die notwendige Elektronik wie zum Beispiel eine Kommunikationseinrichtung, eine Anzeige und/oder weitere Komponenten in einem Anbauteil an der Außenseite der Wandung des Kochgeschirrs angebracht ist. Ein solches Anbauteil wird unter anderem auch Bedienpult genannt. Alternativ kann die Elektronik auch in einem Griff untergebracht werden.

Bei der Verwendung eines Anbauteils an der Wandung des Kochgeschirrs kann die Wärmeübertragung auf die Elektronik problematisch sein, insbesondere wenn eine Batterie als Energiequelle verbaut ist.

Eine Batterie wird in der Regel so ausgelegt, dass sie in der vorbestimmten Nutzungszeit des Kochgeschirrs nicht oder wenn nur sehr selten getauscht werden muss. Durch die beim Kochen entstehende Wärme bzw. Hitze kann eine Batterie jedoch durch die thermische Übertragung vorzeitig altern, was ungünstig ist. Dabei können Temperaturen von über 80 °C bereits schädlich sein.

Es ist daher die Aufgabe der vorliegenden Erfindung, ein sogenanntes Smartgeschirr bzw. ein Kochgeschirr mit einer Elektronikeinrichtung zur Verfügung zu stellen, bei welchem ein Energiespeicher länger hält.

Diese Aufgabe wird gelöst durch die ein Kochgeschirr mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochgeschirr umfasst wenigstens einen Kochgeschirrgrundkörper, wenigstens ein Anbauteil und wenigstens eine Elektronikeinrichtung mit wenigstens einem Energiespeicher. Das Kochgeschirr umfasst wenigstens einen Boden und wenigstens eine Wandung, durch welche wenigstens ein Aufnahmevolumen begrenzt wird. Das Anbauteil ist an der Außenseite der Wandung angeordnet, wobei die Elektronikeinrichtung wenigstens abschnittsweise zwischen einer Vorderseite des Anbauteils und der Wandung des Kochgeschirrgrundkörpers angeordnet ist. Weiterhin ist wenigstens ein Luftleitkanal wenigstens in Wirkverbindung zu der Elektronikeinrichtung und insbesondere zu dem Energiespeicher in dem Anbauteil und/oder zwischen dem Anbauteil und der Außenseite der Wandung des Kochgeschirrgrundkörpers vorgesehen.

Das Anbauteil ist insbesondere das (äußere) Gehäuse der Elektronikeinrichtung bzw. stellt ein Gehäuse zur Verfügung, innerhalb welcher (unter anderem) die Elektronikeinrichtung angeordnet ist. Dabei ist insbesondere wenigstens die Vorderseite des Anbauteils im Wesentlichen geschlossen ausgebildet, sodass diese als abgeschlossenes Bauteil zu erkennen ist, insbesondere in einem optisch ansprechenden Design.

Die Rückseite des Anbauteils, also die Seite, welche der Wandung des Kochgeschirrgrundkörpers zugeordnet ist, kann insbesondere auch gehäuseartig abgeschlossen sein, wobei je nach Ausgestaltung auch eine wenigstens teilweise offene Ausgestaltung vorteilhaft vorgesehen sein kann.

Der Luftleitkanal bzw. Strömungskanal wird insbesondere von Luft durchströmt, um die Elektronikeinrichtung und insbesondere den Energiespeicher zu kühlen.

Das erfindungsgemäße Kochgeschirr bietet viele Vorteile. Ein erheblicher Vorteil bei dem erfindungsgemäßen Kochgeschirr ist, dass eine sonst mögliche thermische Problematik beim Kochen durch den wenigstens einen Luftleitkanal verringert oder sogar vermieden wird.

So kann insbesondere verhindert werden, dass beim Kochen entstehende Hitze von der Wandung zu sehr auf das Anbauteil und somit auf die Elektronikeinrichtung und insbesondere auf den Energiespeicher übertragen wird. So kann ein luftdurchströmtes Anbauteil und/oder durch einen separaten. Luftkanäle vorzugsweise in (direkter) Wirkverbindung zu der Elektronikeinrichtung bzw. dem Energiespeicher die maximale Temperatur an diesen Bauteilen auf 80 °C und je nach Ausgestaltung vorzugsweise sogar auf unter 60 °C begrenzt werden.

Bevorzugt ist wenigstens ein Eingang zu dem Luftleitkanal an einem unteren Abschnitt des Anbauteils und wenigstens ein Ausgang aus dem Luftleitkanal an einem oberen Abschnitt des Anbauteils vorgesehen. Dabei werden sowohl Eingang als auch Ausgang insbesondere durch Öffnungen und/oder auch durch Schlitze bzw. Spalte zur Verfügung gestellt, wobei die Benennung von Eingang und Ausgang daraus resultiert, dass vorzugsweise eine Art Kamineffekt entsteht, sodass Luft von unten in den Luftleitkanal eindringt bzw. eingesaugt wird und nach oben wieder ausgegeben wird.

Insbesondere ist bevorzugt, dass zumindest der Blick in den Ausgang des Luftleitkanals, also oben an dem Anbauteil, versperrt bzw. optisch ansprechend ausgestaltet ist.

Besonders bevorzugt umfasst der Luftleitkanal wenigstens einen wenigstens abschnittsweise von Luft durchströmbaren Spalt zwischen wenigstens einer Rückseite des Anbauteils und der Außenseite der Wandung. Dabei kann der Luftleitkanal insbesondere auch durch einen derartigen Spalt zur Verfügung gestellt werden. Bei einer solchen Ausgestaltung strömt Luft zwischen der Wandung des Kochgeschirrgrundkörpers und dem Anbauteil hindurch, sodass je nach Ausgestaltung auch so eine ausreichende Kühlung erreicht werden kann.

In zweckmäßigen Ausgestaltungen stellt wenigstens ein Gehäuseabschnitt des Anbauteils und/oder die Außenseite der Wandung im Bereich des Anbauteils den Luftkanal wenigstens abschnittsweise bereit bzw. zur Verfügung. Bei einer derartigen Ausgestaltung ist das Anbauteil insbesondere an der Rückseite wenigstens abschnittsweise derart ausgebildet bzw. offen ausgestattet, dass Luft in Richtung der Elektronikeinrichtung dringen kann bzw. das Anbauteil von Luft durchströmt werden kann.

Bevorzugt ist wenigstens ein Tragelement zur Aufnahme des Anbauteils an der Außenseite der Wandung vorgesehen. Ein derartiges Tragelement ist insbesondere dazu vorgesehen, dass das Anbauteil daran befestigt bzw. aufgenommen werden kann. Dabei ist insbesondere bevorzugt, dass das Anbauteil an das Tragelement bzw. auch an mehrere Tragelemente geschraubt werden kann.

Besonders bevorzugt ist wenigstens ein Befestigungselement für das Tragelement an der Außenseite der Wandung angeordnet, wobei das Befestigungselement insbesondere mit der Außenseite der Wandung verschweißt, verklebt, einteilig gefertigt und/oder anders damit verbunden ist. Dabei ist insbesondere vorgesehen, dass das Befestigungselement bzw. die Befestigungselemente im Wesentlichen bolzenartig ausgebildet sind, wobei entsprechende Aufnahmen an den Tragelementen vorgesehen sein können, sodass ein Tragelement z. B. einfach in die Befestigungselemente eingehakt bzw. eingehängt werden können.

Vorzugsweise ist wenigstens ein Abstandselement an dem Tragelement angeordnet. So kann erreicht werden, dass zwischen der Außenseite der Wandung des Kochgeschirrgrundkörpers und dem Anbauteil ein Spalt verbleibt. Dabei kann das Anbauteil insbesondere derart geformt sein, dass das Anbauteil an den Seiten beispielsweise bis an die Wandung des Kochgeschirrgrundkörpers herangeführt ist und der Spalt nur im oberen und unteren Bereich des Anbauteils besteht.

Bevorzugt ist wenigstens ein Zugang zu dem Luftleitkanal mit einer Schutzeinrichtung ausgestattet. Eine derartige Schutzeinrichtung kann beispielsweise in der Art eines Gitters ausgebildet sein. Die Schutzeinrichtung dient insbesondere dazu, das Eindringen von groben Verschmutzungen in den Luftleitkanal und/oder den Spalt zu verhindern.

In vorteilhaften Ausgestaltungen umfasst das Anbauteil weitere Schlitze, Öffnungen und/oder größere Spaltmaße. Derartige Schlitze, Öffnungen und/oder Spaltmaße, dienen dazu, eine zusätzliche bzw. besonders effektive Belüftung des Anbauteils und somit der Elektronikeinrichtung und insbesondere des Energiespeichers zu erreichen, um die Temperatur möglichst gering zu halten, um insbesondere die Lebensdauer des Energiespeichers möglichst zu verlängern bzw. nicht durch thermische Einflüsse zu verkürzen.

In zweckmäßigen Ausführungen sind die Innenseite des Anbauteils und/oder die Außenseite der Wandung im Bereich des Luftleitkanals formal so ausgestaltet, dass die Strömungsgeschwindigkeit positiv beeinflusst wird. Dabei ist hierunter insbesondere zu verstehen, dass die Innenseite des Anbauteils und/oder die Außenseite der Wandung geometrische bzw. in der Form derart ausgestaltet sind, dass eine Strömung durch den Luftleitkanal erleichtert und/oder sogar verstärkt wird.

Bevorzugt weist die Innenseite des Anbauteils und/oder die Außenseite der Wandung im Bereich des Luftleitkanals eine Oberflächenbeschaffenheit auf, welche die Strömungsgeschwindigkeit positiv beeinflusst. Dabei kann die Oberflächenbeschaffenheit beispielsweise durch eine spezielle Bearbeitung der Oberfläche und/oder durch bestimmte Beschichtungen positiv beeinflusst werden.

In vorteilhaften Ausgestaltungen sind weitere Luftleitkanale bzw. Strömungskanäle in dem Anbauteil in Richtung des Energiespeichers vorgesehen. Dort kann insbesondere beispielsweise ein Spalt oder auch ein Röhrchen bzw. eine Leitung in Richtung des Energiespeichers geführt sein.

Bevorzugt ist der Luftleitkanal in das Anbauteil integriert. Auch so kann eine effektive Kühlung erreicht werden.

Vorzugsweise umfasst der Luftleitkanal wenigstens ein Konvektionsröhrchen. Dabei kann ein derartiges Konvektionsröhrchen insbesondere aus einem Material mit einer hohen Wärmeleitfähigkeit gefertigt, insbesondere aus Metall. Dabei ist insbesondere bevorzugt, dass ein geeignetes im Material gewählt wird, welches insbesondere auch Spülmaschinen geeignet ist. So ist die Verwendung von Aluminium in der Regel zu vermeiden, da es hierzu Auswaschungen in der Spülmaschine kommen kann.

Bevorzugt es dem Energiespeicher wenigstens ein Wärmeleitelement zugeordnet. Ein solches Wärmeleitelement kann die zu Kühlung verwendete Luft bzw. kühle Temperatur besonders gut auf den Energiespeicher übertragen. Zudem kann vorzugsweise bereits vorhandene Wärme effektiv abgeführt werden.

Vorzugsweise kann das Wärmeleitelement Teil des Luftleitkanals bzw. in diesen integriert sein.

Bevorzugt besonders bevorzugt stellt das Wärmeleitelement wenigstens ein Teil des Gehäuses des Energiespeichers bereit. So kann eine innen liegende Fläche oder auch ein anderes Gehäuseteil des Energiespeichers aus Metall gefertigt sein bzw. Metall beinhalten. Insbesondere können so auch Pluspol und Minuspol je nach Ausgestaltung bereitgestellt werden.

Ein Aspekt ist es, dass die Elektronikeinrichtung und der Energiespeicher in einem gemeinsamen Gehäuse angeordnet sind. Insbesondere ist dabei vorgesehen, dass das gemeinsame Gehäuse in dem Anbauteil positioniert ist und/oder mit dem Anbauteil einteilig ausgeführt ist. Hierdurch wird eine integrale Bauweise ermöglicht, welche die Anzahl der Teile reduziert.

Bevorzugt steht das Wärmeleitelement in Wirkverbindung zu dem Konvektionsröhrchen bzw. dem restlichen Luftleitkanal. Dann ist insbesondere bevorzugt, dass Luft durch das Konvektionsröhrchen an dem Wärmeleitelement vorbeigeführt wird, welche in Wirkverbindung stehen.

Vorzugsweise ist das Wärmeleitelement von Gehäusematerial des Anbauteils wenigstens abschnittsweise umschlossen. Dabei ist dieses Gehäusematerial insbesondere wenigstens ein Kunststoff, wobei die Umschließung des Wärmeleitelements insbesondere beim Herstellen erreicht werden kann. So kann beim Herstellen beispielsweise ein Wärmeleitelement aus Metall in das Werkzeug zum Herstellen des Anbauteils eingelegt und anschließend mit Gehäusematerial und insbesondere mit Kunststoff wenigstens abschnittsweise umschlossen werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Kochgeschirrs in einer perspektivischen Ansicht und einer Ansicht von unten;
- Figur 2: eine rein schematische Darstellung eines Ausführungsbeispiels eines erfindungsgemäßen Kochgeschirrs in Explosionsdarstellung;
- Figur 3: eine rein schematische Darstellung eines Ausführungsbeispiels eines erfindungsgemäßen Kochgeschirrs in einer Seitenansicht und einer perspektivischen Teilansicht;
- Figur 4: eine rein schematische Darstellung eines Ausführungsbeispiels eines erfindungsgemäßen Kochgeschirrs in einer Seitenansicht und einer perspektivischen Teilansicht;
- Figur 5: eine rein schematische Darstellung eines weiteren Ausführungsbeispiels eines erfindungsgemäßen Kochgeschirrs in einer Schnittansicht von der Seite;
- Figur 6: eine rein schematische Darstellung eines anderen Ausführungsbeispiels eines erfindungsgemäßen Kochgeschirrs in einer Schnittansicht von der Seite;
- Figur 7: eine rein schematische Darstellung eines nächsten Ausführungsbeispiels eines erfindungsgemäßen Kochgeschirrs in einer Schnittansicht von der Seite; und
- Figur 8: eine rein schematische Darstellung eines weiteren Ausführungsbeispiels eines weiteren erfindungsgemäßen Kochgeschirrs in einer Schnittansicht von der Seite.

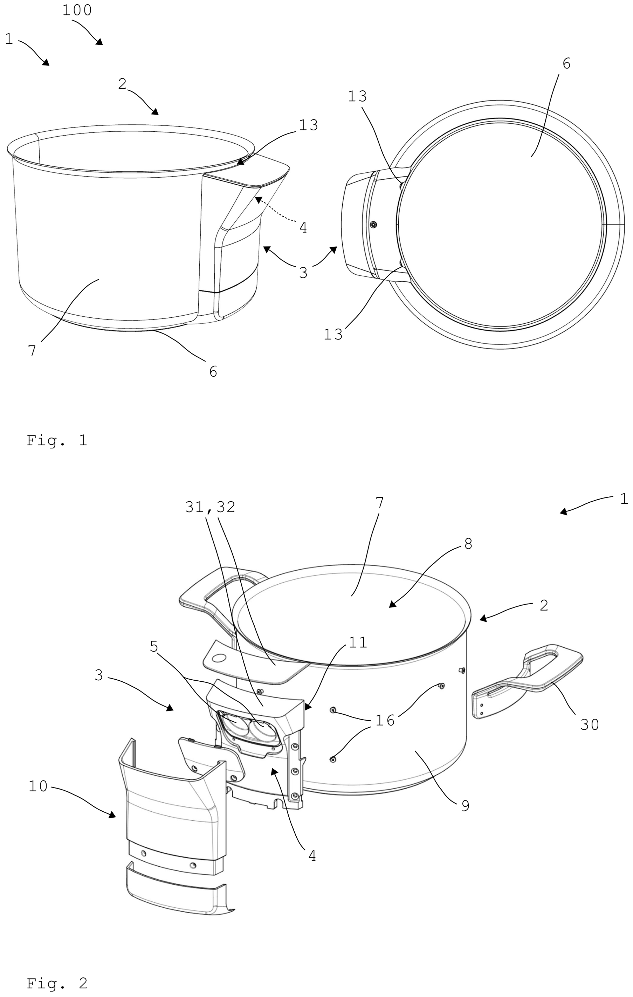

In Figur 1 ist rein schematisch ein erfindungsgemäßes Kochgeschirr 1 in einer perspektivischen Ansicht in einer Ansicht und einer Ansicht von unten dargestellt, wobei das Kochgeschirr 1 hier als Topf 100 ausgebildet ist.

Das Kochgeschirr 1 umfasst einen Kochgeschirrgrundkörper 2, welcher eine Wandung 7 und einen Boden 6 aufweist, welche zusammen ein Aufnahmevolumen 8 begrenzen.

Das gezeigte Kochgeschirr 1 ist als ein sogenanntes "smartes" Kochgeschirr ausgeführt, welches je nach Ausgestaltung verschiedene Sensoren umfassen kann und auch je nach Ausführung eine Kommunikationseinrichtung und eine Steuer- und/oder Bedieneinrichtung umfasst, sodass auch über das Kochgeschirr 1 zumindest einzelne Funktionen eines Kochfeldes und/oder auch Information angezeigt und/oder bedient werden können.

Dazu umfasst das Kochgeschirr 1 ein Anbauteil 3, welches an der Außenseite 9 der Wandung 7 des Kochgeschirrs 1 bzw. des Kochgeschirrgrundkörpers 2 angeordnet ist. In diesem Anbauteil 3 ist eine Elektronikeinrichtung 4 mit je nach Ausführung vorgesehenen Komponenten bzw. Baugruppen aufgenommen, wobei die Elektronikeinrichtung 4 in dem gezeigten Ausführungsbeispielen auch einen Energiespeicher 5 umfasst.

Dabei ist die Elektronikeinrichtung 4 hier zwischen einer Vorderseite 10 des Anbauteils 3 und der Wandung 7 des Kochgeschirrgrundkörpers 2 aufgenommen bzw. angeordnet.

Die beim Kochen entstehende Wärme von der Wandung 7 des Kochgeschirrgrundkörpers 2 auf das Anbauteil 3 übertragen werden, sodass dieses schlimmstenfalls so heiß werden könnte, dass zumindest der Energiespeicher 5 der Elektronikeinrichtung 4 durch die thermische Beanspruchung negativ bezüglich der Lebensdauer beeinflusst werden könnte.

Um dies zu vermeiden, ist erfindungsgemäß ein Luftleitkanal 13 vorgesehen, durch welchen kühlende Luft strömen kann, sodass hier die maximale Temperatur des Anbauteils 3 bzw. der Elektronikeinrichtung 4 bzw. insbesondere des Energiespeichers 5 auf unter 80 °C und vorzugsweise sogar auf unter 60 °C begrenzt werden kann. So kann vermieden werden, dass durch eine zu hohe thermische Beanspruchung die Lebensdauer des Energiespeichers 5 nachteilig beeinflusst wird.

In dem hier gezeigten Ausführungsbeispiel sind die Seiten des Anbauteils 4 bis an die Wandung 7 des Kochgeschirrgrundkörpers 2 herangezogen, sodass ein quasi bündiger Übergang zwischen Anbauteil 3 und Kochgeschirrgrundkörper 2 besteht. Oben und unten am Anbauteil ist zu erkennen, dass ein Luftleitkanal 13 bzw. Öffnungen dazu in dem Anbauteil 3 vorgesehen sind und/oder zwischen der Wandung 7 und dem Anbauteil 3 bestehen, sodass zwischen Anbauteil bzw. Elektronikeinrichtung 4 und Wandung 7 des Kochgeschirrgrundkörpers 2 kühlende Luft strömen kann. Dabei ist insbesondere bevorzugt, dass hier eine Art Kamineffekt entsteht, sodass kühlende Luft von unten nach oben durch das Anbauteil bzw. zwischen Anbauteil und Wandung 7 des Kochgeschirrgrundkörpers 2 strömen kann.

In Figur 2 ist das in Figur 1 gezeigte Ausführungsbeispiel eines erfindungsgemäßen Kochgeschirrs 1 in einer Explosionsdarstellung gezeigt, wobei hier weiterhin eingezeichnet ist, dass auch Griffe 30 an der Außenseite 9 der Wandung 7 vorgesehen sein können.

Das Anbauteil 3 dient insbesondere als Gehäuse bzw. Abdeckung für die Elektronikeinrichtung 4, welche verschiedene Funktionalitäten für einen Benutzer im Bereich des smarten Kochens bereitstellen kann. Dabei umfasst die Elektronikeinrichtung 4 in dem hier gezeigten Ausführungsbeispiel wie zuvor schon angedeutet unter anderem eine nicht näher dargestellte Kommunikationseinrichtung, mittels welcher das Kochgeschirr mit einem Kochfeld bzw. einer Kochfeldeinrichtung kommunizieren kann. Weiterhin umfasst die Elektronikeinrichtung 4 in dem gezeigten Ausführungsbeispiel in dem oberen Bereich des Anbauteils 3 eine Bedieneinrichtung 31, in welche hier auch eine Anzeigeeinrichtung 32 integriert ist.

Zur Befestigung des Anbauteils und somit auch der Elektronikeinrichtung 4 an dem Kochgeschirrgrundkörper 2 bzw. ab der Außenseite 9 der Wandung 7 sind in dem gezeigten Ausführungsbeispiel bolzenartig Befestigungselemente 16 an der Außenseite der Wandung 7 befestigt, hier durch ein Anschweißen der Befestigungselemente 16. Die gleichen Befestigungselemente 16 sind in dem gezeigten Ausführungsbeispiel auch vorgesehen, um die Griffe 30 an der Außenseite 9 der Wandung 7 zu befestigen.

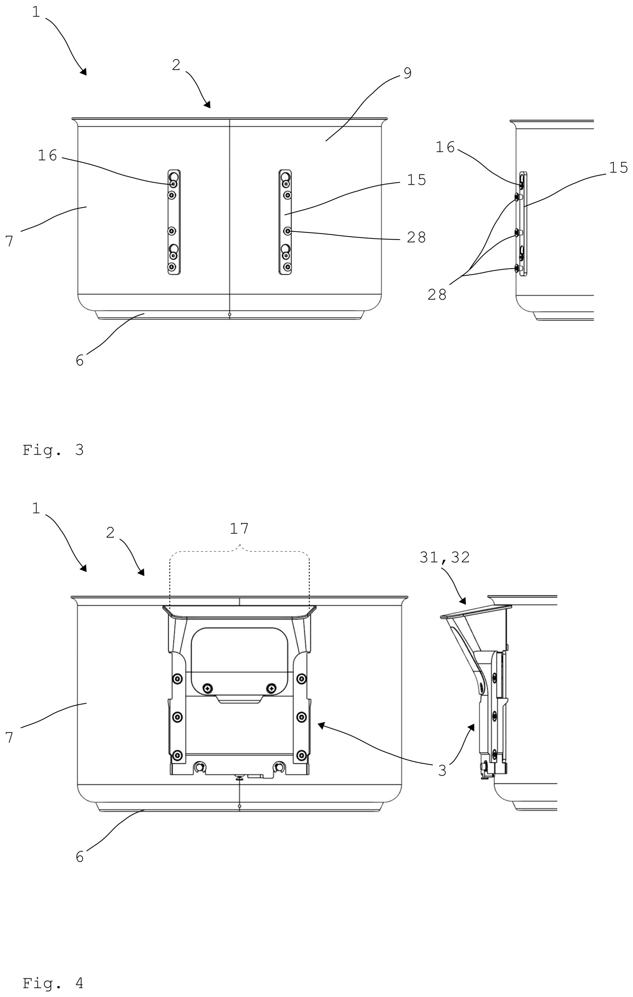

In Figur 3 ist rein schematisch dargestellt, dass Tragelemente 15 in die Befestigungselemente 16 eingehängt werden können bzw. mit diesem befestigt werden können. Dabei wird an diesen Tragelementen 15 das Anbauteil 3 aufgenommen bzw. befestigt.

Weiterhin ist in dem gezeigten Ausgangsbeispiel dargestellt, dass an den Tragelementen 15 Abstandselement 28 vorgesehen sind, welche auch hier bolzenartig ausgebildet sind. Über diese Abstandselemente 28 kann das Anbauteil 3 mit einem gewissen Abstand bzw. mit einem Spalt 12 zwischen der Außenseite 9 der Wandung 7 und der Rückseite 11 des Anbauteils 3 angeordnet werden. Durch den Spalt 12 wird bereits ein Luftleitkanal 13 zur Verfügung gestellt, welcher je nach Ausgestaltung eine ausreichende Kühlung bzw. eine thermische Entkopplung zwischen Wandung 7 und Anbauteil 3 erreichen kann.

In Figur 4 ist rein schematisch dargestellt, dass das Anbauteil 3 in dem gezeigten Ausführungsbeispiel an die Tragelemente 15 angeschraubt wird, wobei hier jeweils in den Abstandselementen 28 ein entsprechendes Gewinde vorgesehen ist, um das Anbauteil 3 zu befestigen. So wird in dem gezeigten Ausführungsbeispiel erreicht, dass ein Spalt bzw. ein Luftleitkanal 13 über nahezu die gesamte Breite 17 des Anbauteils 3 zur Verfügung gestellt wird.

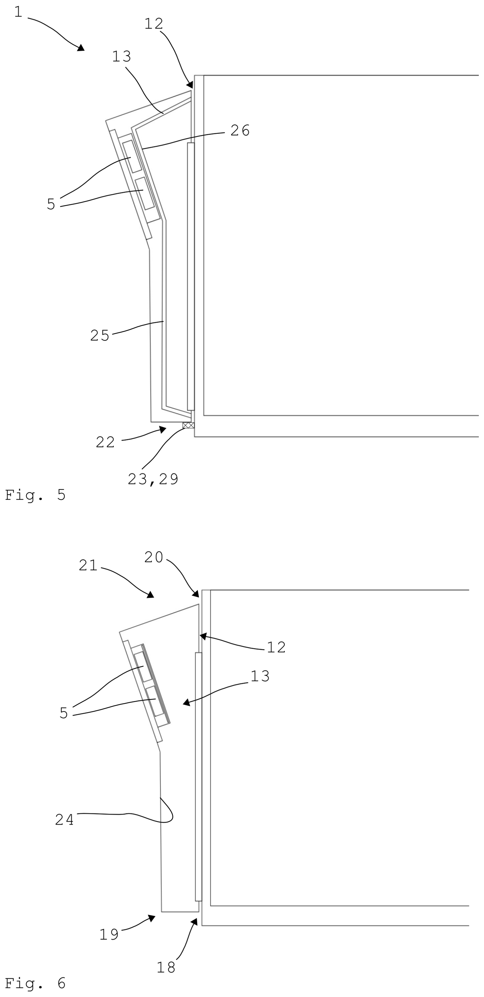

In Figur 5 ist rein schematisch in einer Schnittansicht von der Seite ein weiteres erfindungsgemäßes Kochgeschirr 1 dargestellt, welches vom Grundaufbau dem zuvor gezeigten Ausführungsbeispiel entspricht.

Dabei ist auch hier ein Spalt 12 zwischen Anbauteil 3 und außen Seite 9 der Wandung 7 des Kochgeschirrgrundkörpers 2 vorgesehen. Zusätzlich zu dem so bereits verfügbaren Luftleitkanal 13 ist hier durch ein Konvektionsröhrchen 25 ein weiterer Luftleitkanal 13 in dem Anbauteil 3 vorgesehen. Dabei steht hier das Konvektionsröhrchen in unmittelbarem Kontakt zu dem Energiespeicher 5.

Dabei stellt das Konvektionsröhrchen 25 in dem gezeigten Ausführungsbeispielen auch ein Wärmeleitelement 26 zur Verfügung. Weiterhin ist in Figur 5 dargestellt, dass wenigstens ein Zugang zu dem Luftleitkanal 13 mittels wenigstens einer Schutzeinrichtung 23 ausgestattet ist, sodass gröbere Verschmutzungen nicht in den Luftleitkanal 13 und/oder den Spalt 12 eindringen können. Dabei ist die Schutzeinrichtung dran 20 hier als Gitter 29 bzw. gitterartig ausgebildet. Eine solche Schutzeinrichtung 23 kann je nach Ausführung sowohl oben als auch unten an einem Zugang 22 zu dem Luftleitkanal 13 bzw. dem Spalt 12 angeordnet sein.

In Figur 6 ist rein schematisch ein weiteres Ausführungsbeispielen eines erfindungsgemäßen Kochgeschirrs 1 dargestellt, welches vom Grundaufbau den zuvor gezeigten Ausführungen entspricht. Auch hier kennt man, dass in einem unteren Abschnitt 19 des Anbauteils 3 ein Eingang zu dem Luftleitkanal 13 und/oder dem Spalt 12 ist, wobei an einem oberen Abschnitt 21 ein Ausgang 20 aus dem Luftleitkanal 13 bzw. dem Spalt 12 besteht.

Weiterhin ist hier bevorzugt, dass die Innenseite 24 des Anbauteils 13 bzw. des Luftleitkanals 13 und/oder die Außenseite 9 der Wandung 7 formal und/oder von der Oberflächenbeschaffenheit derart gestaltet ist, dass ein Durchströmen mit kühlender Luft positiv beeinflusst wird.

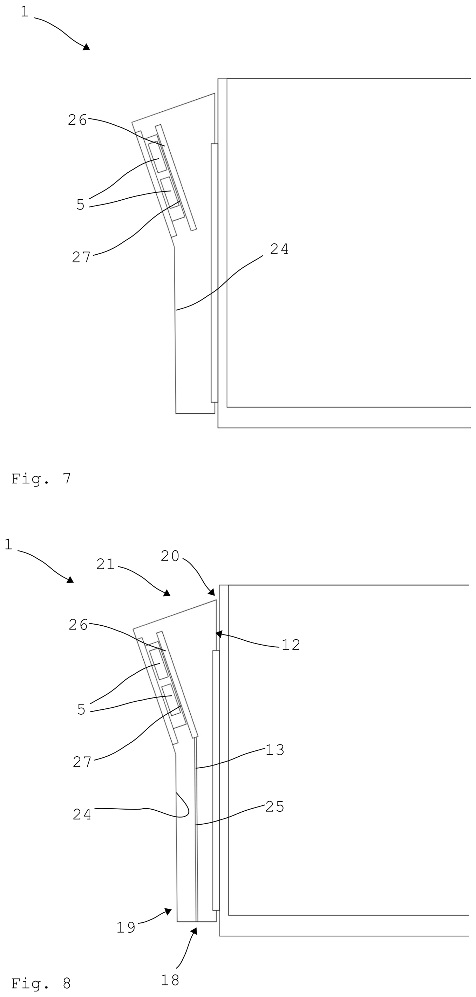

In Figur 7 rein schematisch ein nächstes Ausführungsbeispiel eines erfindungsgemäßen Kochgeschirrs in einer schematischen Seitenansicht dargestellt, welches vom Grundaufbau den zuvor gezeigten Ausführungen entspricht. Auch hier ist zu erkennen, dass ein Luftleitkanal 13 zwischen Außenseite 9 der Wandung 7 und der Innenseite 24 des Anbauteils 13 besteht.

Hier ist das Gehäuse 27 der Elektronikeinrichtung 4 bzw. des Energiespeichers 5 als Wärmeleitelement 26 aus Metall ausgebildet, wobei das Wärmeleitelement 26 je nach Ausgestaltung auch den Pluspol und/oder Minuspol für den Energiespeicher 5 bereitstellen kann.

Die Materialwahl für das Wärmeleitelement 26 kann derart gewählt werden, dass ein besonders guter Wärmeübergang erfolgt. So ist insbesondere Metall günstig als Wärmeleitelement 26 einsetzbar. Hier ist insbesondere bevorzugt, dass die Materialbeschaffenheit derart ist, dass auch eine Spülmaschinenfestigkeit besteht. Insbesondere Aluminium könnte nämlich in der Spülmaschine auswaschen, wodurch Aluminium als Wärmeleitelement nicht immer vorteilhaft ist.

In Figur 8 ist ein anderes Ausführungsbeispiel eines erfindungsgemäßen Kochgeschirrs 1 dargestellt, welches vom Grundaufbau den zuvor gezeigten Ausführungen entspricht. Anders als in zuvor gezeigten Ausführungen ist zusätzlich zu durch Luftführung durch das Anbauteil 3 ein Konvektionsröhrchen 25 vorgesehen, welches direkt in Kontakt zu einem Wärmeleitelement 26 der Elektronikeinrichtung 4 bzw. des Energiespeichers 5 steht.

### Bezugszeichenliste

- 1: Kochgeschirr
- 2: Kochgeschirrgrundkörper
- 3: Anbauteil
- 4: Elektronikeinrichtung
- 5: Energiespeicher
- 6: Boden
- 7: Wandung
- 8: Aufnahmevolumen
- 9: Außenseite
- 10: Vorderseite
- 11: Rückseite
- 12: Spalt
- 13: Luftleitkanal
- 14: Gehäuseabschnitt
- 15: Tragelement
- 16: Befestigungselement
- 17: Breite
- 18: Eingang
- 19: unterer Abschnitt
- 20: Ausgang
- 21: oberer Abschnitt
- 22: Zugang
- 23: Schutzeinrichtung
- 24: Innenseite
- 25: Konvektionsröhrchen
- 26: Wärmeleitelement
- 27: Gehäuse
- 28: Abstandselement
- 29: Gitter
- 30: Griff
- 31: Bedieneinrichtung
- 32: Anzeigeeinrichtung
- 100: Topf

## Patentansprüche

1. Kochgeschirr (1) umfassend
wenigstens einen Kochgeschirrgrundkörper (2),
wenigstens ein Anbauteil (3) und
wenigstens eine Elektronikeinrichtung (4) mit wenigstens einem Energiespeicher (5), wobei der Kochgeschirrgrundkörper (2) wenigstens einen Boden (6) und wenigstens eine Wandung (7) umfasst und wobei durch den Boden (6) und die Wandung (7) wenigstens ein Aufnahmevolumen (8) begrenzt wird,
wobei das Anbauteil (3) an der Außenseite (9) der Wandung (7) angeordnet ist und wobei die Elektronikeinrichtung (4) wenigstens abschnittsweise zwischen einer Vorderseite (10) des Anbauteils (3) und der Wandung (7) angeordnet ist,
**dadurch gekennzeichnet,**
**dass** wenigstens ein Luftleitkanal (13) wenigstens in Wirkverbindung zu der Elektronikeinrichtung (4) und insbesondere dem Energiespeicher (5) in dem Anbauteil (3) und/oder zwischen dem Anbauteil (3) und der Außenseite (9) der Wandung (7) vorgesehen ist.

2. Kochgeschirr (1) nach Anspruch 1, **dadurch gekennzeichnet, dass** wenigstens ein Eingang (18) zu dem Luftleitkanal (13) an einem unteren Abschnitt (19) des Anbauteils (3) und dass wenigstens ein Ausgang (20) aus dem Luftkanal (13) an einem oberen Abschnitt (21) des Anbauteils (3) vorgesehen ist.

3. Kochgeschirr (1) nach einem der vorhergehenden Ansprüche, wobei die Elektronikeinrichtung (4) und der Energiespeicher (5) in einem gemeinsamen Gehäuse (27) angeordnet sind, und wobei das Gehäuse (27) in dem Anbauteil (3) positioniert ist und/oder mit dem Anbauteil (3) einteilig ausgeführt ist.

4. Kochgeschirr (1) nach einem der vorhergehenden Ansprüche, **dadurch gekennzeichnet, dass** der Luftleitkanal (13)
wenigstens einen wenigstens abschnittsweise von Luft durchströmbaren Spalt (12) zwischen wenigstens einer Rückseite (11) des Anbauteils (3) und der Außenseite (9) der Wandung (7) umfasst
und/oder
wenigstens ein Konvektionsröhrchen (25) umfasst.

5. Kochgeschirr (1) nach einem der vorhergehenden Ansprüche, **dadurch gekennzeichnet, dass**
wenigstens ein Gehäuseabschnitt (14) des Anbauteils (3) und/oder die Außenseite (9) der Wandung (7) im Bereich des Anbauteils (3) den Luftleitkanal (13) wenigstens abschnittsweise bereitstellt
und/oder
der Luftleitkanal (13) in das Anbauteil (3) integriert ist.

6. Kochgeschirr (1) nach einem der vorhergehenden Ansprüche, **dadurch gekennzeichnet, dass** wenigstens ein Tragelement (15) zur Aufnahme des Anbauteils (3) an der Außenseite (9) der Wandung (7) vorgesehen ist.

7. Kochgeschirr (1) nach dem vorhergehenden Anspruch, **dadurch gekennzeichnet, dass** wenigstens ein Befestigungselement (16) für das Tragelement (15) an Außenseite (9) der Wandung (7) angeordnet ist, wobei das Befestigungselement (16) insbesondere mit der Außenseite (9) der Wandung (7) verschweißt, verklebt, einteilig gefertigt und/oder anders damit verbunden ist.

8. Kochgeschirr (1) nach einem der beiden vorhergehenden Ansprüche, **dadurch gekennzeichnet, dass** wenigstens ein Abstandselement (28) an dem Tragelement (15) angeordnet ist.

9. Kochgeschirr (1) nach einem der vorhergehenden Ansprüche, **dadurch gekennzeichnet, dass** wenigstens ein Zugang (22) zu dem Luftleitkanal (13) mit einer Schutzeinrichtung (23) ausgestattet ist.

10. Kochgeschirr (1) nach einem der vorhergehenden Ansprüche, **dadurch gekennzeichnet, dass** das Anbauteil (3) weitere Schlitze, Öffnungen und/oder größere Spaltmaße aufweist.

11. Kochgeschirr (1) nach einem der vorhergehenden Ansprüche, **dadurch gekennzeichnet, dass**
die Innenseite (24) des Anbauteils (3) und/oder die Außenseite (9) der Wandung (7) im Bereich des Luftleitkanals (13) formal so ausgestaltet sind, dass die Strömungsgeschwindigkeit positiv beeinflusst wird
und/oder
die Innenseite (24) des Anbauteils (3) und/oder die Außenseite (9) der Wandung (7) im Bereich des Luftleitkanals (13) eine Oberflächenbeschaffenheit aufweist, welche die Strömungsgeschwindigkeit positiv beeinflusst.

12. Kochgeschirr (1) nach einem der vorhergehenden Ansprüche, **dadurch gekennzeichnet, dass** wenigstens ein weiterer Luftleitkanal in dem Anbauteil (3) in Richtung des Energiespeichers vorgesehen sind.

13. Kochgeschirr (1) nach einem der vorhergehenden Ansprüche, **dadurch gekennzeichnet, dass** dem Energiespeicher (5) wenigstens ein Wärmeleitelement (26) zugeordnet ist.

14. Kochgeschirr (1) nach einem der vorhergehenden Ansprüche, **dadurch gekennzeichnet, dass**
das Wärmeleitelement (26) wenigstens einen Teil des Gehäuses (27) des Energiespeichers (5) bereitstellt
und/oder
das Wärmeleitelement (26) von Gehäusematerial (28) des Anbauteils (3) wenigstens abschnittsweise umschlossen ist.

15. Kochgeschirr (1) nach einem der vorhergehenden Ansprüche 14 bis 16, **dadurch gekennzeichnet, dass** das Wärmeleitelement (26) mit dem Konvektionsröhrchen (25) in Wirkverbindung steht.
